Europäisches Patentamt

European Patent Office

Office européen des brevets

(11) Veröffentlichungsnummer: **0 208 859**
**B1**

(12) # EUROPÄISCHE PATENTSCHRIFT

(45) Veröffentlichungstag der Patentschrift:
21.03.90

(51) Int. Cl.⁴: **H02P 5/40**

(21) Anmeldenummer: 86106369.1

(22) Anmeldetag: 09.05.86

(54) **Drehstromerreger für Synchronmaschinen.**

(30) Priorität: 04.07.85 CH 2888/85

(43) Veröffentlichungstag der Anmeldung:
21.01.87 Patentblatt 87/4

(45) Bekanntmachung des Hinweises auf die Patenterteilung:
21.03.90 Patentblatt 90/12

(84) Benannte Vertragsstaaten:
AT CH DE FR GB IT LI SE

(56) Entgegenhaltungen:
US-A- 3 748 555

TECHNISCHE MITTEILUNGEN AEG-TELEFUNKEN,
Band 58, Nr. 3, 1968, Seiten 145-148, DE; E. SCHNEIDER
et al.: "Bürstenloses Erregunssystem Rotaduct für
Synchrongeneratoren und -motoren mittlerer Leistung"
BROWN BOVERI REVUE, Nr. 4/5, 1982, Seiten 163-169;
A. KLOSS et al.: "Cage induction motors of medium
rating with current source converters"
ELEKTRIE, Band 30, Nr. 7, 1976, Seiten 370-373, DD; P.
FOCKE: "Überspannungen in Niederspannungsnetzen
und deren Bedämpfung in leistunselektronischen
Geräten"
IDEM

(73) Patentinhaber: BBC Brown Boveri AG, Haselstrasse,
CH-5401 Baden(CH)

(72) Erfinder: Canay, Muzaffer, Dr., Holzgasse 331,
CH-5242 Birr(CH)

# Beschreibung

Die Erfindung bezieht sich auf einen Drehstromerreger für Synchronmaschinen nach dem Gattungsbegriff des Patentanspruchs 1.

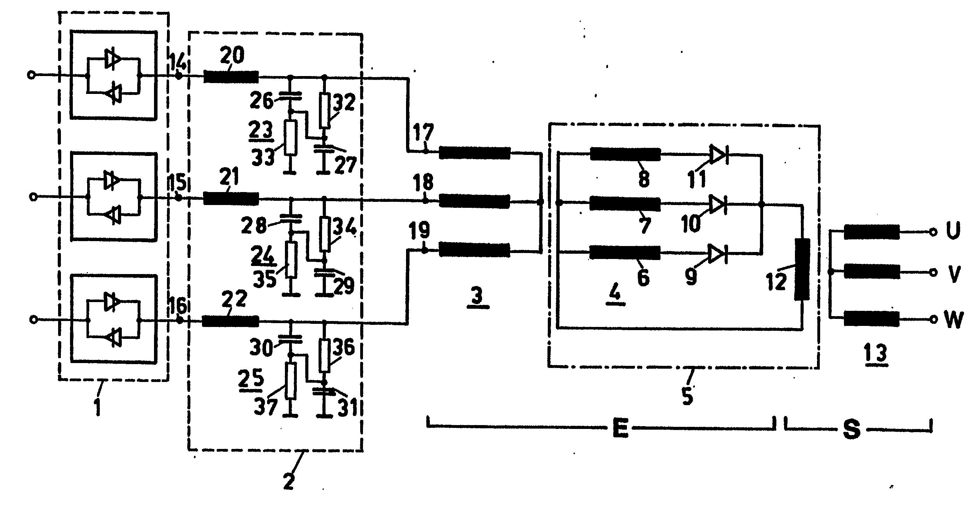

Mit diesem Gattungsbegriff nimmt die Erfindung Bezug auf einen Stand der Technik, wie er sich beispielsweise aus der DE-Zeitschrift "Techn. Mitt. AEG-TELEFUNKEN" 58(1968)3, S. 145-148, "Bürstenloses Erregungssystem ...", insbesondere Bild 2.3 erkennen lässt.

Erregeranordnungen für Synchronmaschinen ohne Schleifringe und Bürsten sind überall dort vorteilhaft, wo wartungsfreier Betrieb besonders hoch zu bewerten ist oder Stromübertragung mit Hilfe gleitender Kontakte prinzipielle Schwierigkeiten bereitet. Eine bekannte Lösung der bürstenlosen Synchronmaschine mit einem Drehstrom-Erregergenerator und rotierenden Halbleiterbauelementen ist die Ausführung, wie sie in der vorgenannten Veröffentlichung beschrieben ist.

Dort trägt die Welle der Innenpol-Hauptmaschine einerseits das Polrad dieser Hauptmaschine und andererseits den Läufer der Erregermaschine, die als Aussenpolmaschine ausgeführt ist, und deren Drehstrom-Ankerwicklung auf eine Drehstromgleichrichteranordnung in Sternschaltung mit ungesteuerten Halbleitern arbeitet (Bild 1 + 2.3 a.a.O). Alternativ kann die Drehstromgleichrichteranordnung in Brückenschaltung ausgeführt sein (Bild 1 + 2.1 a.a.O).

Die Drehstrom-Sternschaltung ist dort günstiger, wo Erregerspannungen benötigt werden, bei denen die zulässigen Sperrspannungen der Dioden nicht ausgenutzt werden können. Der Aufwand an Gleichrichtern halbiert sich gegenüber der Brückenschaltung, und es können überdies alle Dioden auf einen gemeinsamen Kühlkörper gesetzt werden.

Diese Einsparungen an den Gleichrichtern werden aber durch einen grösseren Kupferaufwand in der Ankerwicklung der Erregermaschine erkauft, der sich aus dem ungünstigeren Verhältnis des Gleichstromes zum Effektivwert des Strangstromes bei der Sternschaltung ergibt. Die grössere Welligkeit der Gleichspannung in der Sternschaltung ist bei der grossen Induktivität der Erregerwicklung der Hauptmaschine ohne Bedeutung. Der Schutzwiderstand parallel zur Polradwicklung wurde hier aufgeteilt und parallel zu den einzelnen Gleichrichterzweigen geschaltet. Auf diese Weise erübrigt sich der Einbau von Kondensatoren zur Unterdrückung der Kommutierungsspannung an den Dioden.

Die vorbeschriebenen Schutzmassnahmen reichen in der Regel ohne weiteres aus, um die Kommutierungs-Spannungsspitzen in ertragbaren Grenzen zu halten, wenn die Drehstromerregermaschine von einer Spannungsquelle oder einem spannungsgeführten Umrichter, sogenannter U-Umrichter, gespeist wird. Bei Speisung durch einen Wechselstrom-Steller, der bei gleicher Leistung wesentlich kostengünstiger ist, treten jedoch viel höhere Kommutierungs-Spannungsspitzen auf. Diese sind als Folge der gegenseitigen Beeinflussung der Oberwellen und insbesondere bei Maschinen, bei denen der Stator der Drehstrom-Erregermaschine im Gegendrehsinn zum Drehsinn des Rotors gespeist ist, bis zu fünf mal höher und sie können nur durch sehr aufwendige Diodenbeschaltungen im Rotor beherrscht werden.

Bekanntlich gibt es zwei Arten von Spannungen, die auf Halbleiter-Dioden wirken.

1) Trägerspeichereffekt:
Solche Spannungen treten auf, wenn der sehr kleine Rückstrom von einigen mA nach dem Stromnulldurchgang wieder abreisst. Die dabei entstehende scharfe Spannungsspitze hängt von der Diode selbst und von der Kommutierungsindiktivität des Kreises ab und wird mit wachsender Arbeitstemperatur, Durchlassstrom und Kommutierungsinduktivität des Kreises grösser. Bei einem gegebenen Kreis mit fester Induktivität und konstantem Durchlassstrom (ohne starke Oberwellen) treten beim Abreissen des Rückstromes immer gleiches di/dt und gleiche Spannungsspitzen auf.

Um diese Spannungsspitzen zu reduzieren, werden bekanntlich Dioden-Schutzbeschaltungen mit R & C-Elementen vorgenommen.

Solange diese Spannungsspitzen aber unter der Sperrspannungsgrenze der Dioden und der zulässigen Isolationsspannung der Wicklung liegen, sind sie harmlos. Es gibt Maschinen (ohne Dioden-Schutzbeschaltung), die bisher keinen Anlass zur Beanstandung gegeben haben.

2) Spannungsspitzen durch transformatorische Uebertragung zwischen Stator und Rotor:
Im stationären Zustand entsteht im Rotor eine Grundwellenspannung, die dem vorhandenen Luftspaltfeld entspricht. Stellt man sich aber die Arbeitsweise des Drehstromstellers als Einschalten einer Spannung von z.B. 380 Volt in kurzen Zeitintervallen vor, so kann der Spitzenwert dieser transformatorischen Spannung in diesem Fall bis weit über 1000 Volt steigen.

Beide Effekte zusammen reichen aber nicht aus, um die Dioden mit einer Sperrspannung von 2,4 kVolt zu gefährden. Es treten nämlich folgende Anomalien auf:
- der Kommutierungsvorgang einer Diode erfolgt nicht in jeder Periode in gleicher Form;
- die Periodendauer (Zeit zwischen aufeinanderfolgenden Kommutierungsvorgängen) entspricht nicht exakt der Drehzahl;
- die Spannungsspitzen treten unterschiedlich gross auf und die Höchstwerte sind gesamthaft gesehen bis fünfmal grösser als ohne Drehstromsteller.

Diese Anomalien können auch mit dem TSE-Effekt und "Spannungsspitzen" nicht erklärt werden.

Dabei ist zudem zu beachten, dass die Analogie zwischen der Arbeitsweise des Drehstromstellers und dem plötzlichen Einschalten nicht ganz zutreffend ist.

Umfangreiche Versuche haben eindeutig bestätigt, dass die Ursache der Anomalie in der gegenseitigen Beeinflussung des Drehstromstellers und der Mittelpunktschaltung liegt. Ein Drehstromsteller und eine oberwellenarme Brückenschaltung oder nur eine Mittelpunktschaltung ohne Drehstromsteller erzeugen keine derart hohen Spannungsspitzen und vor allem keine Unregelmässigkeiten in der Kommutierung, obwohl der Trägerspeichereffekt und die transformatorische Uebertragung voll vorhanden sind.

Mathematisch ausgedrückt erfolgt diese gegenseitige Beeinflussung mittels eingeprägten Stromoberwellen, die sowohl von der Mittelpunktschaltung als auch vom Drehstromsteller reichlich erzeugt werden. Der Drehstromsteller und die Mittelpunktschaltung im Rotor vertragen sich also schlecht.

Bei Maschinen mit variabler Drehzahl bis hin zu 6000 rpm und höher bereitet die Ausführung der bekannten RC-Beschaltungstechnik konstruktive Schwierigkeiten hinsichtlich Unterbringung, Abstützung, Verkabelung der Bauelemente, die gesamthaft die Baulänge der gesamten Maschine vergrössern.

Die Erfindung, wie sie in den Patentansprüchen gekennzeichnet ist, löst die Aufgabe, einen Wechselstromerreger der eingangs genannten Gattung anzugeben, der sich durch eine kurze Baulänge und einen vergleichsweise konstruktiv bescheidenen Aufwand der Schutzbeschaltung für die Halbleiterbauelemente des Erregergleichrichters auszeichnet.

Während sich bis anhin die Massnahmen zum Schutz der Halbleiter auf deren unmittelbare Nachbarschaft, also auf den Rotor - und dort das sogenannte Gleichrichter-Trägerrad - konzentrierten, beschreibt die Erfindung einen eher unkonventionellen, aber erfolgreicheren Weg, nämlich die "Schutzbeschaltung" statorseitig anzuordnen. Ihre grundlegende Idee besteht darin, einem parallelen Pfad für hochfrequente Ströme bereits im bzw. vor dem Stator bereitzustellen, so dass die gegenseitige Beeinflussung der Stator- und Rotoroberwellen stark reduziert wird. Dadurch gehen die TSE-Spannungsspitzen auf ihren normalen Wert zurück. Der Verbindungsweg zwischen Drehstromsteller und Stator der Erregermaschine weist erfindungsgemäss Tiefpasscharakter auf, mit der Folge, dass nur Nutzströme auf ihm fliessen können, die hochfrequente Ströme zur und von der Maschine jedoch abgeleitet werden.

Die Erfindung eignet sich insbesondere für Synchronmaschinen mit einstellbarer Drehzahl von Null bis 6000 rpm und höher. Bei einer derartigen Maschine speist ein Drehstromsteller mit variabler Amplitude seines Ausgangsstroms den Stator einer Drehstromerregermaschine, deren Rotor im Gegendrehsinn des Statordrehfeldes läuft, um die Erregung der Hauptmaschine bereits im Stillstand zu ermöglichen.

In der Zeichnung, die ein Ausführungsbeispiel der Erfindung veranschaulicht, speist ein dreiphasiger Drehstromsteller 1 mit einstellbarer Stromamplitude über eine Schutzschaltung 2 mit Tiefpasscharakteristik die Statorwicklung 3 einer Drehstromerregermaschine E, deren dreiphasige Rotorwicklung mit 4 und deren Rotor mit 5 bezeichnet ist.

In Serie zu jeder Phasenwicklung 6, 7, 8 sind Gleichrichterdioden 9, 10, 11 geschaltet, die kathodenseitig zusammengeschaltet sind. Die freien Enden der Phasenwicklungen 6, 7, 8 sind gleichfalls zusammengeschaltet. Parallel zu dieser Schaltungsanordnung, die eine dreiphasige Gleichrichter-Mittelpunktsschaltung darstellt, liegt die Erregerwicklung 12 der Hauptmaschine S, deren dreiphasige Statorwicklung mit 13 bezeichnet ist.

Beim Drehstromsteller (I-Umrichter) 1 handelt es sich um eine bekannte Einrichtung, wie sie zur Speisung drehzahlvariabler Antriebe, insbesondere Asynchronmaschinen-Antriebe verwendet wird und beispielsweise in Aufbau und Funktion in der Zeitschrift "Brown Boveri Mitteilungen" 4/5-82, S. 168, Fild 7, dargestellt ist.

Zwischen den Ausgangsklemmen 14, 15, 16 des Drehstromstellers 1 und den Statorklemmen 17, 18 bzw. 19 der Drehstromerregermaschine 3 ist die dreiphasig aufgebaute Schutzschaltung 2 geschaltet, deren Aufbau und Wirkungsweise nachfolgend beschrieben wird.

In Serie mit den Klemmen 14, 15, 16 liegt jeweils eine Drossel 20, 21, 22. Zwischen die Verbindungsleitung von den Drosseln 20, 21 und 22 an den Statorklemmen 17, 18 und 20 und Erde ist je eine RC-Kombination 23, 24 bzw. 25 geschaltet, die im Beispielsfall aus je zwei Kondensatoren 26 bis 31 und ohmschen Widerständen 32 bis 37 besteht. Die Parallelschaltungen der Widerstände 32, 34, 36 und der Kondensatoren 26, 28 bzw. 30 liegen jeweils in Serie zu den Parallelschaltungen der Widerstände 33, 36 und 37 und der Kondensatoren 27, 29 bzw. 31.

Jede Verbindung zwischen den Klemmen 14 und 17, 15 und 18, sowie 16 und 19 weist somit Tiefpasscharakteristik auf.

Wegen der Selbsterregungsgefahr müssen die Werte der Kondensatoren und Widerstände der Schutzschaltung 2 der Drehstromerregermaschine angepasst sein, wobei insbesondere die Widerstandswerte so ausgewählt sein müssen, dass sie möglichst wenig Zusatzverluste verursachen.

Die Drosseln 20, 21, 22 haben dabei in erster Linie die Aufgabe, Spannungsspitzen in den Gleichrichterdioden 9, 10, 11 zu reduzieren und gleichzeitig auch die Verluste in annehmbaren Grenzen zu halten, und können im Bedarfsfall entfallen.

Mögliche Varianten von RC-Kombinationen 23, 24, 25 bestehen darin

a) entweder die Glieder 32 und 27, 34 und 29, 36 und 31 wegzulassen, d.h. die RC-Kombination umfasst nur noch die Serienschaltung eines Kondensators mit einem ohmschen Widerstand

b) oder es werden jeweils die Widerstände 32, 34 und 36 weggelassen (Serienschaltung eines Kondensators mit der Parallelschaltung eines Kondensators und eines ohmschen Widerstandes

c) oder eine der beiden Parallelschaltungen aus Widerstand und Kondensator der Serienschaltung entfällt: jede RC-Kombination umfasst nur noch die Parallelschaltung eines Kondensators und eines Widerstandes, z.B. 27 und 33, 29 und 35, 31 und 37.

Die Wirkungsweise der erfindungsgemässen Schutzbeschaltung werden nachfolgend näher erläutert.

Der als Stromquelle wirkende Drehstromsteller erzeugt neben der Grundquelle von Netzfrequenz (50 oder 60 Hz) auch eingeprägte Stromharmonische mit den ungeraden Ordnungszahlen -5, 7, -11, 13, -17 usw. Die von den Rotorharmonischen als Folge der Mittelpunktschaltung erzeugten Statorstrom-Oberwellen usw. können also im Stator nicht mehr fliessen. Ebenso können im Rotor die den Statoroberwellen entsprechenden Ströme nicht mehr fliessen. Mit anderen Worten ausgedrückt heisst dies: Der Stator für die Rotoroberwellen und der Rotor für die Statoroberwellen wirkt wie offen. Alle eingeprägten Stromoberwellen fliessen demzufolge über die Hauptinduktivität der Maschine und erzeugen höhere Spannungen und höhere Spannungsspitzen. Dabei ist weiterhin zu beachten, dass mit dem offen wirkenden Stator auch die Kommutierungsinduktivität für die Dioden im Rotor vergrössert wird. Beide Effekte führen zur Zerstörung der Diode, wenn nicht geeignete Schutzmassnahmen ergriffen werden. Wie eingangs aufgezeigt, besteht grundsätzlich die Möglichkeit, durch Einsatz extrem überdimensionierter Gleichrichterdioden gegebenenfalls in Kombination mit Dioden-Schutzbeschaltungen, die den Dioden unmittelbar zugeordnet, d.h. auf dem Rotor im sogenannten Gleichrichter-Trägerrad untergebracht sind, die Halbleiterbauelemente zu schützen. Dies führt insbesondere bei Schnelläufern zu erheblichen konstruktiven Schwierigkeiten.

Die Erfindung beschreitet jedoch hinsichtlich Idee und kontruktivem bzw. schaltungsmässigem Konzept einen völlig anderen Weg, der darin besteht, die Schutzschaltung dem Stator der Drehstromerregermaschine zuzuordnen und einen parallelen Weg für hochfrequente Ströme bereits im Stator der Erregermaschine herzustellen, so dass die gegenseitige Beeinflussung der Stator- und der Rotoroberwellen stark reduziert wird.

Aus den vorstehenden Darlegungen geht hervor, dass die erfindungsgemässe Schutzschaltung der jeweiligen Systeme Drehstromsteller/Drehstromerregermaschine angepasst werden muss.

## Patentansprüche

1. Drehstromerreger für Synchronmaschinen mit einem bürstenlosen Erregungssystem, umfassend eine Drehstrom-Erregermaschine (E) mit einer mehrphasigen Rotorwicklung (4) deren Phasenwicklungen (6, 7, 8) an eine auf dem Rotor (5) befindliche Gleichrichter-Mittelpunktsschaltung (9, 10, 11) angeschlossen sind, welche die Erregerwicklung (12) der Synchronmaschine (S) speist, und bei der die Statorwicklung (3) der Drehstrom-Erregermaschine (E) von einer Drehstromquelle (1) gespeist ist, mit Mitteln zum Schutz der Halbleiterbauelemente (9, 10, 11) der Gleichrichter-Mittelpunktsschaltung, dadurch gekennzeichnet, dass die Drehstrom-Erregermaschine (E) von einem Drehstromsteller (1) gespeist ist und dass zwischen besagtem Drehstromsteller (1) und der Statorwicklung (3) der Drehstromerregermaschine eine Schutzschaltung (2) mit Tiefpasscharakteristik geschaltet ist.

2. Drehstromerreger nach Anspruch 1, dadurch gekennzeichnet, dass der Drehstromsteller (1) in der Amplitude seines Ausgangsstromes einstellbar ist.

3. Drehstromerreger nach Anspruch 1 oder 2, dadurch gekennzeichnet, dass die Schutzschaltung (2) für jede Phase mindestens eine Kombination (23, 24, 25) aus ohmschen Widerständen (32 ... 37) und Kondensatoren (26 ... 31) enthält, welche in Serie- und/oder in Parallelschaltung zwischen die Leitungen zwischen Drehstromsteller-Ausgang (14, 15, 16) und Statorklemmen (17, 18, 19) der Drehstrom-Erregermaschine und Erdpotential geschaltet sind.

4. Drehstromerreger nach Anspruch 3, dadurch gekennzeichnet, dass zwischen den Drehstromsteller-Ausgang (14, 15, 16) und die besagten RCGlieder Längsdrosseln (20, 21, 22) geschaltet sind.

5. Drehstromerreger nach einem der Ansprüche 1 bis 4, dadurch gekennzeichnet, dass der Stator (3) der Drehstrom-Erregermaschine (E) im Gegendrehsinn zum Drehsinn des Rotors (5) gespeist ist.

## Claims

1. Three-phase exiter for synchronous machines having a brushless excitation system, comprising a three-phase exciter machine (E) having a multiphase rotor winding (4), the phase windings (6, 7, 8) of which are connected to a rectifier star circuit (9, 10, 11) which is located on the rotor (5) and which feeds the exciter winding (12) of the synchronous machine (S), and in which the stator winding (3) of the three-phase exciter machine (E) is fed from a three-phase source (1), with means for protecting the semi-conductor components (9, 10, 11) of the rectifier star circuit, characterized in that the three-phase exciter machine (E) is fed from a three-phase power controller (1) and that a protection circuit (2) with low-pass characteristic is connected between the said three-phase power controller (1) and the stator winding (3) of the three-phase exciter machine.

2. Three-phase exciter according to Claim 1, characterized in that the amplitude of the output current of the three-phase controller (1) is adjustable.

3. Three-phase exciter according to Claim 1 to 2, characterized in that the protection circuit (2) for each phase contains at least one combination (23, 24, 25) of resistive impedances (32...37) and capacitors (27...31) which are connected in a series and/or in a parallel circuit between the lines between the three-phase power controller output (14, 15, 16) and stator terminals (17, 18, 19) of the three-phase exciter machine and earth potential.

4. Three-phase exciter according to Claim 3, characterized in that series reactors (20, 21, 22) are connected between the three-phase power controller output (14, 15, 16) and the said RC sections.

5. Three-phase exciter according to one of Claims 1 to 4, characterized in that the stator (3) of the three-phase exciter machine (E) is fed in the direction of rotation opposite the direction of rotation of the rotor (5).

**Revendications**

1.- Excitateur à courant triphasé pour machines synchrones à système d'excitation sans balais, comprenant une machine excitatrice à courant triphasé (E) avec un enroulement de rotor polyphasé (4) dont les enroulements de phase (6, 7, 8) sont connectés à un circuit à prise médiane de redresseur (9, 10, 11) se trouvant sur le rotor (5), qui alimente l'enroulement d'excitation (12) de la machine synchrone (S), et dans lequel l'enroulement de stator (3) de la machine excitatrice à courant triphasé (E) est alimenté par une source de courant triphasé (1), comportant des moyens pour protéger les composants semi-conducteurs (9, 10, 11) du circuit à prise médiane de redresseur, caractérisé en ce que la machine excitatrice à courant triphasé (E) est alimentée par un gradateur de courant triphasé (1) et qu'entre ledit gradateur de courant triphasé (1) et l'enroulement de stator (3) de la machine excitatrice à courant triphasé, est connecté un circuit de protection (2) à caractéristique passe-bas.

2.- Excitateur à courant triphasé suivant la revendication 1, caractérisé en ce que l'amplitude du courant de sortie du gradateur de courant triphasé (1) est réglable.

3.- Excitateur à courant triphasé suivant la revendication 1 ou 2, caractérisé en ce que le circuit de protection (2) contient, pour chaque phase, au moins un circuit (23, 24, 25) de résistances ohmiques (32 ... 37) et de condensateurs (26 ... 31), ces circuits étant connectés en série et/ou en parallèle d'une part, entre les lignes prévues entre les sorties du gradateur de courant triphasé (14, 15, 16) et les bornes de stator (17, 18, 19) de la machine excitatrice à courant triphasé et, d'autre part, le potentiel de masse.

4.- Excitateur à courant triphasé suivant la revendication 3, caractérisé en ce qu'entre la sortie du gradateur de courant triphasé (14, 15, 16) et lesdits circuits RC sont connectées des bobines longitudinales (20, 21, 22).

5.- Excitateur à courant triphasé suivant l'une quelconque des revendications 1 à 4, caractérisé en ce que le stator de la machine excitatrice à courant triphasé (E) est alimenté dans un sens de rotation opposé à celui du rotor (5).